# FASCICULE DE BREVET EUROPEEN

(11) **EP 3 008 378 B1**
(45) Date de publication et mention de la délivrance du brevet: **17.03.2021**
(21) Numéro de dépôt: 14750531.7
(22) Date de dépôt: 16.06.2014
(51) Int. Cl.: F21S 43/14, F21S 43/27, F21S 43/237, F21S 43/245, F21S 43/251, F21S 43/50

(54) **DISPOSITIF D'ÉCLAIRAGE POUR VEHICULE À HOMOGÉNÉITÉ DE LUMIÈRE À ÉVOLUTION CONTINUE**
BELEUCHTUNGSMODUL FÜR KRAFTFAHRZEUGE MIT KONTINUIERLICH ENTWICKELTER LICHTHOMOGENITÄT
LIGHTING MODULE FOR MOTOR VEHICLES HAVING CONTINUOUSLY EVOLVING LIGHT HOMOGENEITY

(30) Priorité: 14.06.2013 FR 1301383
(43) Date de publication de la demande: 20.04.2016
(73) Titulaire: Marelli Automotive Lighting France, 89330 Saint-Julien-du-Sault (FR)
(72) Inventeur: BUISSON, Alain, F-78190 Trappes (FR); GAUTIER, Christophe, F-78190 Trappes (FR); FICHOT, Yves, F-78190 Trappes (FR)
(74) Mandataire: Jacobacci Coralis Harle
(86) Numéro de dépôt international: PCT/FR2014/051484
(87) Numéro de publication internationale: WO 2014/199108

(56) Documents cités:
- EP-A1- 2 292 466
- EP-A1- 2 317 214
- EP-A1- 2 338 732
- EP-A1- 2 378 187
- EP-A1- 2 450 726
- EP-A1- 2 587 120
- EP-A2- 1 033 526
- EP-A2- 2 071 228
- WO-A1-2006/054225
- DE-A1- 10 356 483
- DE-A1- 19 746 025
- DE-A1- 19 943 821
- DE-A1-102006 037 797
- FR-A1- 2 805 885
- US-A- 5 222 795

## Description

La présente invention concerne le domaine de l'éclairage de véhicule, en particulier de la signalisation des véhicules, comme connue des documents DE 103 56 483 A1 et EP 2 388 732 A1. Dans une application préférée mais non exclusive, l'invention se rapporte à un dispositif pour feux arrière de véhicules automobiles, conçu et agencé pour pouvoir procurer un éclairement homogène, doté d'une évolution continue de l'homogénéité dans l'espace.

Les feux arrière des véhicules automobiles permettent généralement de remplir différentes fonctions d'éclairage et de signalisation du véhicule.

Dans la pratique, plusieurs dispositifs optiques arrière sont généralement fixés sur la structure du véhicule, ainsi qu'éventuellement sur la porte du coffre arrière. On peut citer notamment les indicateurs de direction ou feux clignotants, les feux de stop, les feux anti-brouillard, les feux de position, les feux de stationnement, les feux de détresse et les catadioptres.

La réglementation en vigueur impose, selon les types de véhicules, différents feux d'éclairage ou de signalisation. Mais, outre le volume de l'ensemble des feux, les performances et l'uniformité d'éclairement des feux individuels, éventuellement regroupés sont des préoccupations majeures.

On connaît à cet égard des guides de lumière destinés à homogénéiser la lumière émanant d'une diode électrolunimescente DEL ou LED pour en anglais « Luminescent Electronic Diode » ou destinés à créer des éclairages avec effets de style.

On connaît ainsi dans l'art antérieur des écrans auxiliaires transparents dans lesquels peut se propager la lumière émise par une source de lumière auxiliaire, ces écrans étant destinés à équiper un feu, notamment arrière, d'un véhicule automobile. Des discontinuités locales prévues dans le matériau de l'écran constituent des foyers de diffusion de la lumière hors de ces écrans voir publication de brevet français FR 2 868 506.

Dans une demande de brevet allemand DE 101 01 795 sont décrits des feux clignotants, notamment des clignotants avant pour véhicules automobiles, dans lesquels une source de lumière auxiliaire pour feu de position illumine un élément disposé transversalement dans l'espace entre le feu principal et la glace frontale, et procure à travers celle-ci un éclairement de même direction que celle du feu principal.

Dans une demande de brevet français FR 2 819 040, est décrit un composant d'optique ou de style pour l'éclairage ou la signalisation de véhicules automobiles. Ce composant est en matériau transparent, à l'intérieur duquel des foyers de diffusion de la lumière sont situés uniquement en des endroits prédéterminés pour diffuser la lumière émise par une source associée au dispositif d'éclairage ou de signalisation concerné. Ce composant peut constituer la glace d'un projecteur de véhicule automobile, ou un insert ayant sa place dans un tel projecteur.

Dans une demande de brevet allemand DE 103 11 317 est décrit un dispositif d'éclairage pour véhicule comportant un guide de lumière comprenant des structures de diffusion situées essentiellement au foyer de surfaces réfléchissantes qui laissent ainsi diffuser un éclairement homogène.

Par ailleurs, une demande EP 0 936 403 décrit un dispositif d'éclairage pour véhicule à moteur, en particulier pour feux de signalisation, comportant un guide de lumière allongé et conçu pour augmenter l'intensité du faisceau lumineux sous un angle donné. Les éléments optiques ajoutés pour cela se situent dans l'axe du faisceau lumineux émis par la LED. Le système comporte en outre des éléments à pans biseautés, dont les portions correspondantes doivent être agencées pour éviter la déperdition de lumière en dehors de l'angle de vision dans lequel la concentration est souhaitée, pour un éclairement directif maximal.

Dans ces diverses applications et ces divers modes de réalisation d'écrans lumineux diffusant la lumière émise par au moins une LED, il peut apparaître des inhomogénéités dans la lumière diffusée, en particulier quand il s'agit de guides dont peuvent être munis les rideaux ou écrans diffuseurs.

Quant à l'éclairage direct par des LED de forte ou de moyenne puissance, il est désormais reconnu qu'il est aveuglant et ne devrait pas être généralisé sous cette forme.

Il est donc apparu utile de chercher à améliorer l'uniformisation et/ou le rendu lumineux des dispositifs d'éclairage et de signalisation, notamment des véhicules automobiles, et/ou à en masquer les éventuelles inhomogénéités, avec en option des effets de style, dans des conditions économiques et esthétiques avantageuses de manière à conserver la qualité de la signalisation tout en réduisant l'éblouissement ressenti par l'observateur.

La présente invention vise à procurer des moyens pour fournir un éclairage ayant un tel rendu homogène avec évolution continue, et apportant aux utilisateurs un rendu beaucoup moins fatigant ou moins aveuglant que les éclairages par LED actuellement commercialisés, et au surplus permettant des effets de style que les dispositifs connus ne permettaient pas d'atteindre.

A cet effet l'invention concerne un dispositif d'éclairage de véhicule avec les caractéristiques de la revendication 1.

La mise en œuvre de la portion diffusante située en amont par rapport à l'extrémité distale du guide de lumière dans le sens de propagation de la lumière permet d'assurer une diffusion la lumière progressive de sorte que l'intégralité de l'énergie lumineuse sortant du guide ne l'est pas au niveau de l'extrémité distale de ce dernier ce qui diminue l'éblouissement ressentie. Par ailleurs, le fait que l'extrémité distale du guide est formée par la partie de transmission de la lumière en matériaux transparent permet de conserver une puissance lumineuse émise par l'extrémité distale suffisamment importante pour garantir une bonne perception du dispositif d'éclairage à distance ce qui est important dans le cas d'un feu arrière notamment. Il doit être remarqué que l'extrémité plane inclinée du guide de lumière confère à son extrémité distale une forme biseautée.

Avec un tel dispositif, on obtient donc un éclairage remarquable, en ce sens que son intensité est d'un niveau exceptionnel, par rapport à la puissance initiale fournie par la LED, et surtout le dispositif procure une évolution continue de l'homogénéité du faisceau émis par le feu allumé par l'intermédiaire du guide susdit. Plus précisément, l'éclairage issu de la source de lumière se trouve distribué sur une zone d'éclairement secondaire graduellement homogène.

Par source de lumière à LED, on entend aussi bien et indifféremment la mise en œuvre d'une LED unique ou encore la mise en œuvre d'un ensemble de plusieurs LED alignées selon une courbe ou ligne correspondant en à la forme de l'extrémité proximale du guide de lumière et placé sur un même support également appelé PCB.

Selon une caractéristique de l'invention, la convexité de la région incurvée est orientée vers la face de latérale de sortie de la lumière.

Selon l'invention, la portion diffusante peut être réalisée de différentes manières. Ainsi selon une caractéristique de l'invention, la portion diffusante comprend, d'une part, une partie diffusante formant la face latérale de sortie de la lumière au niveau de la portion diffusante et réalisée dans un matériau translucide ou transparent chargé de nanoparticules et, d'autre part, la partie de transmission de la lumière de forme complémentaire de la partie diffusante et réalisée dans le matériau transparent non chargé, la partie diffusante présentant, en section droite transversale, une épaisseur variable qui augmente en direction d'une extrémité distale du guide de lumière.

Selon cette caractéristique la portion diffusante est une portion bi-matière essentiellement composée d'un ensemble obtenu par surmoulage sur la partie de transmission de la lumière qui présente alors dans la région diffusante une section droite progressivement réduite en direction de l'extrémité distale du guide, de la partie diffusante complémentaire en matériau nanochargé ayant ainsi une épaisseur évolutive augmentant en direction de l'extrémité libre du guide.

Par matériau nanochargé, on entend un matériau apte à créer une diffusion des rayonnements lumineux qu'il reçoit quand le feu est allumé, sous l'effet de nano- et/ou micro-inclusions appropriées. L'homme du métier est apte à effectuer des essais pour choisir, dans chaque cas d'espèce, la nature, la disposition et/ou la proportion de telles inclusions.

De manière préférée, le guide de lumière possède une épaisseur sensiblement constante depuis son extrémité proximale jusqu'au biseau de son extrémité distale.

Selon une autre caractéristique de l'invention, la portion diffusante comprend, sur une face opposée à la face latérale de sortie de la lumière, des motifs en creux qui définissent dans la partie de transmission de la lumière des surfaces de réflexion de la lumière.

Selon une variante de cette caractéristique, les motifs en creux sont formés par des stries en V dont la pointe du V est orientée vers l'intérieur du guide de lumière.

Selon une autre variante de cette caractéristique, la densité ou le pas des motifs en creux est variable. Cette variation permet d'induire une progressivité de la diffusion de la lumière le long du guide.

Selon l'invention la région diffusante peut alors comprendre soit uniquement la partie bi-matériau matériau transparent/ matériau nano-chargé, soit uniquement les motifs en creux, soit la combinaison des motifs en creux et de la partie bi-matériau.

Selon une caractéristique de l'invention, le dispositif d'éclairage comprend, entre la source de lumière et le guide de lumière, un collimateur dont l'extrémité proximale est située à proximité immédiate ou au contact de la source de lumière et dont l'extrémité distale est située à proximité immédiate ou au contact de l'extrémité distale du guide de lumière. Un tel collimateur qui peut être formé par un guide de lumière auxiliaire en matériau transparent dont les faces latérales portent un revêtement réfléchissant, permet de bien diriger et concentrer la lumière issue de la source de lumière vers le guide de lumière.

Selon une variante de cette caractéristique le dispositif d'éclairage comprend, à la jonction du collimateur et du guide de lumière, un élément diffusant en contact avec le collimateur et le guide de lumière. La mise en œuvre de cet élément diffusant permet d'atténuer la visibilité des points lumineux formés par les LED.

Dans le cadre de cette variante, l'élément diffusant peut être réalisé dans un matériau transparent ou translucide comprenant des micro-inclusions et/ou des micro-irrégularités.

Selon une autre variante de cette caractéristique, l'élément diffusant présente une épaisseur mesurée entre le entre le collimateur et le guide de lumière comprise entre 0,5 mm et 0,8 mm. Une telle épaisseur garantie un bon compromis entre l'uniformisation assurée par l'élément diffusant et l'atténuation induite par celui-ci.

Selon une variante de cette caractéristique, le tunnel du support de masque est adapté pour recevoir l'extrémité distale du collimateur.

Selon une autre caractéristique de cette forme de réalisation, le dispositif d'éclairage comprend dans le boitier au moins un masque en partie au moins opaque situé en dessous et/ou en dessus du guide de lumière.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

Par ailleurs, diverses autres caractéristiques de l'invention ressortent de la description annexée effectuée en référence aux dessins qui illustrent des formes non limitatives de réalisation d'un dispositif d'éclairage conforme à l'invention.
- La Fig. 1 est une coupe schématique selon un plan horizontal médian d'un dispositif d'éclairage selon l'invention.
- La Fig. 2 est une vue à plus grande échelle du détail A de la fig.1.
- La Fig. 3 est une vue à plus grande échelle du détail B de la fig.1.
- La Fig. 4 est une coupe schématique selon un plan horizontal médian d'une autre variante de réalisation d'un dispositif d'éclairage selon l'invention.
- La Fig. 5 est une vue à plus grande échelle du détail B' de la fig. 4.
- La Fig. 6 est une vue à plus grande échelle du détail C de la fig. 5.
Il est à noter que sur ces figures les éléments structurels et/ou fonctionnels communs aux différentes variantes peuvent présenter les mêmes références.

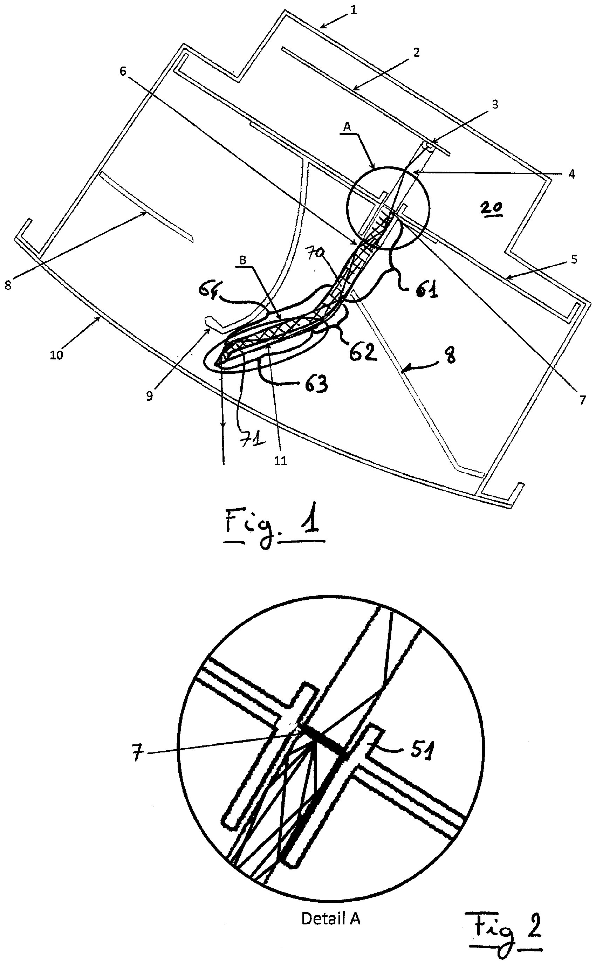

Comme le montre la Fig. 1, dans la variante de réalisation qui y est représentée, le dispositif d'éclairage selon l'invention comprend un boîtier ou platine 1, renfermant un PCB 2, sur lequel est fixée une source de lumière à LED 3. Un collimateur 4 est fixé perpendiculairement audit PCB avec son extrémité proximale au droit des LEDs.

L'extrémité distale du collimateur 4 est engagée dans un tunnel de taille correspondante d'un support de masque 5 qui supporte ainsi le collimateur 4. Le support de masque 5 définit dans le boitier 1 une chambre 20 de réception de la source de lumière 3. Le support de masque 5 est opaque de sorte que la chambre de réception 20 est sensiblement étanche à la lumière. Le support de masque 5 peut être recouvert sur sa face orientée sur l'extérieur de la chambre d'un revêtement réfléchissant.

Le collimateur 4 est, dans le cas présent, formé par une pièce transparente formant guide de lumière dont la surface latérale est recouverte d'un matériau réfléchissant. Bien entendu, le collimateur 4 pourrait être réalisé de toute autre manière appropriée de manière à diriger un maximum de lumière issue de la source 3 vers l'extrémité distale du collimateur.

Le dispositif d'éclairage comprend également un guide de lumière 6 qui possède une section droite horizontale allongée. Selon l'exemple illustré le guide de lumière possède une de coque partiellement incurvée. Ainsi dans le cas présent, le guide de lumière 6 possède, à partir de son extrémité proximale qui est située à proximité immédiate de l'extrémité distale du collimateur 4, une région rectiligne 61. Le guide de lumière 6 comprend au-delà de cette région rectiligne 61 une région incurvée 62 qui dans le cas présent se prolonge par une région rectiligne 63 jusqu'à une extrémité distale libre du guide de lumière 6.

L'extrémité proximale du guide de lumière 6 est engagée dans le tunnel 51 du support 5 qui porte alors le guide de lumière 6.

Selon l'exemple illustré, le dispositif d'éclairage comprend un élément diffusant 7 qui est intercalé entre le collimateur 4 et le guide de lumière 6. Comme le montre la fig. 2, l'élément diffusant est, selon l'exemple illustré, réalisé dans un matériau transparent ou translucide comprenant des micro-inclusions et/ou des micro-irrégularités. Dans le cas présent, l'élément diffusant présente une épaisseur mesurée entre le collimateur 4 et le guide de lumière 6 comprise entre 0,5 mm et 0,8 mm.

Le dispositif d'éclairage comprend également à l'intérieur du boitier 1 des masques 8 et 9 réalisés en matériau opaque qui entourent au moins partiellement le guide de lumière 6 de manière à occulter des émissions de lumière parasites et/ou à créer un effet visuel. Les masques sont fixés sur le boitier 1 et/ou le support de masque 5. Selon l'exemple illustré le masque 9 est fixé sur le support de masque 5 et possède une forme incurvée qui suit en partie la forme incurvée du guide de lumière en étant placé à distance de ce dernière du côté de sa concavité. La face du masque 9 orientée vers le guide de lumière 6 est alors recouverte d'un revêtement réfléchissant.

Le boitier 1 est fermé par une face avant 10 qui est en partie au moins translucide ou transparente. La face avant est par exemple réalise, en verre ou en PMMA et peut être configuré pour jouer le rôle d'une lentille externe.

Conformément à une caractéristique essentielle de l'invention, le guide de lumière 6 comprend portion diffusante allongée s'étendant dans la direction d'extension du guide de lumière sur une partie seulement de la longueur du guide de lumière comme le montre la figure 1 et adaptée pour diffuser, par une face latérale F de sortie de la lumière, au moins 10 % de la lumière totale issue du guide de lumière 6. La portion diffusante 64 est située entre la partie rectiligne 61 et l'extrémité distale du guide 6 et s'étendant en partie au moins dans la région incurvée 62. Selon l'exemple illustré, la face latérale de sortie de la lumière F est située du côté de la convexité du guide de lumière 6.

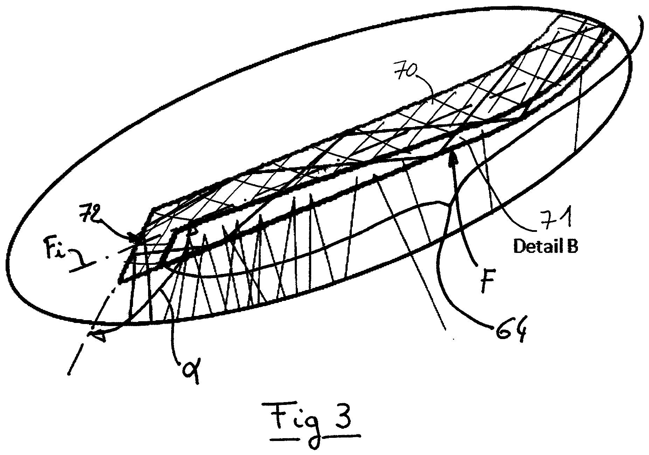

Le guide de lumière est principalement formé par une partie de transmission de la lumière qui s'étend sur toute la longueur du guide 6 et qui est repérée par des hachures croisées aux figures 1 et 3. Cette partie de transmission de la lumière 70 est formée dans un matériau transparent non chargé tel que par exemple du PMMA.

Selon l'exemple illustré, le guide de lumière 6 est formé dans la portion diffusante 64 par une partie diffusante 71 formant la face latérale de sortie de la lumière F au niveau de la portion diffusante et représentée sans hachure aux fig. 1 et 3. La partie diffusante est réalisée dans un matériau translucide ou transparent chargé de nanoparticules surmoulé dans la partie de transmission de la lumière 70. La partie diffusante présente alors une épaisseur variable qui augmente en direction d'une extrémité distale du guide de lumière. Ainsi les parties diffusante 71 et de transmission de la lumière 70 possèdent une forme complémentaire de manière que guide de lumière présente une épaisseur sensiblement constante sur toute sa longueur.

Selon l'invention, l'extrémité distale du guide de lumière est formée par la partie de transmission de la lumière 70 et présente une face extrême plane 72 qui forme un angle α obtus non plat et différent de l'angle droit avec la fibre moyenne Fi du guide de lumière. Cette configuration permet de réfléchir vers la face de sortie de la lumière F le reste de la lumière guidée par le guide 6.

Il doit être remarqué que selon l'exemple illustré, la partie de diffusion 71 possède en tout point une épaisseur inférieure ou égale à l'épaisseur totale du guide de lumière 6.

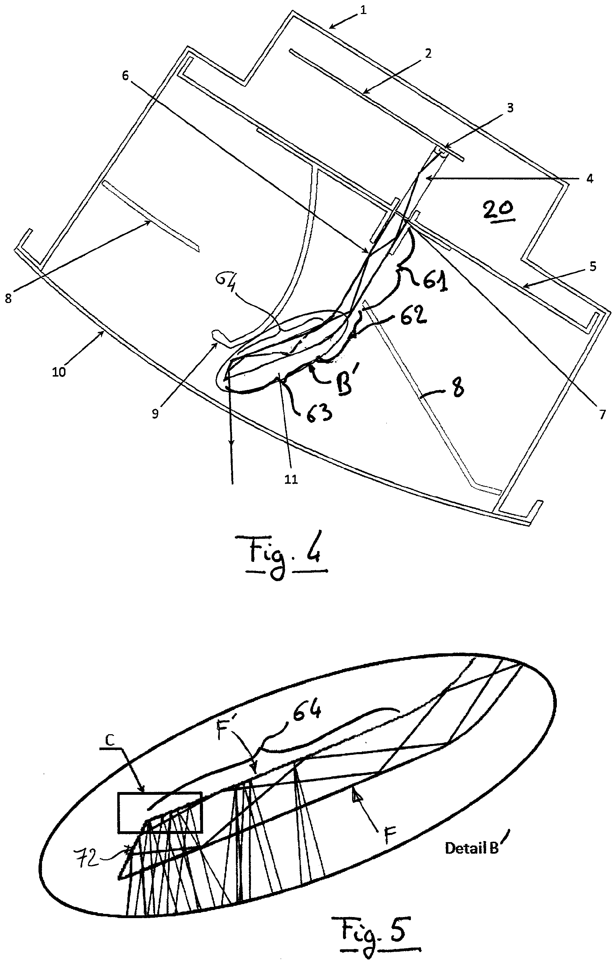

Les figures 4 à 6 illustre une variante de réalisation du dispositif d'éclairage selon l'invention qui diffère de celle illustrée en relation avec les figures 1 à 3 en ce que le guide de lumière est intégralement formé par la partie transparente non chargée de transmission de la lumière 70 et ne comprend pas de partie diffusante formée par un matériau nano-chargé.

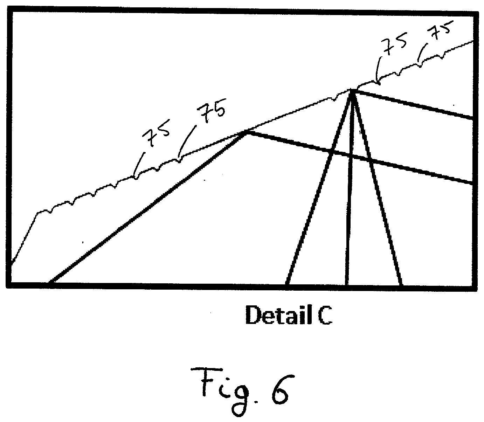

Selon cette variante et comme le montre la fig. 6, la portion diffusante 64 comprend sur une face F' opposée à la face latérale F de sortie de la lumière des motifs en creux 75 qui définissent dans la partie de transmission de la lumière des surfaces de réflexion de la lumière vers la face latérale de sortie F. Dans le cas présent les motifs en creux sont formés par des stries en V dont la pointe du V est orientée vers l'intérieur du guide de lumière. Les stries 75 sont parallèles les unes aux autres est sont séparés d'un pas variable. Ce pas varie de préférence de manière à diminuer en direction de l'extrémité distale du guide de lumière 6.

Il doit être noté, les motifs en creux 75 peuvent être combinés à la mise en œuvre de la partie diffusante en matériau manochargé.

Bien entendu, diverses autres modifications peuvent être apportées à l'invention dans le cadre des revendications annexées.

## Revendications

1. Dispositif d'éclairage de véhicule, comprenant au moins une source de lumière (3) à diode électroluminescente ou LED et un guide de lumière (6) allongé dont une extrémité proximale est située sur une ligne de propagation de la lumière issue de la source de lumière (3), que le guide de lumière (6) comprend :
- une partie de transmission de la lumière (70) en un matériau transparent qui s'étend sur toute la longueur du guide de lumière ;
- une portion diffusante allongée (64) s'étendant dans la direction d'extension du guide de lumière sur une partie seulement de la longueur du guide de lumière (6) et adaptée pour diffuser par une face latérale (F) de sortie de la lumière au moins 10 % de la lumière totale issue du guide de lumière (6) ;
- à partir de son extrémité proximale, une région rectiligne (61) constituée uniquement de la partie de transmission de la lumière (70) et au-delà de la partie rectiligne (61) et en direction de son extrémité distale, une région incurvée (62), la portion diffusante (64) étant située entre la partie rectiligne (61) et l'extrémité distale et s'étendant en partie au moins dans la région incurvée (62) ;
- une extrémité distale qui est formée par la partie de transmission de la lumière et qui présente une face extrême (72) plane formant un angle (a) obtus non plat et différent de l'angle droit avec la fibre moyenne (Fi) du guide de lumière (6) ;
**caractérisé en ce que** le dispositif d'éclairage comprend un boîtier (1) à l'intérieur duquel sont situés la source de lumière (3) et le guide de lumière (6), et qui est fermé par une face avant (10) en partie au moins transparente et/ou translucide pour permettre la diffusion à l'extérieur du faisceau de lumière issu du guide de lumière (6), et **en ce que** à l'intérieur du boîtier, un support de masque (5) qui délimite dans le boîtier (1) une chambre de réception (20) de la source de lumière (3) sensiblement étanche à la lumière et qui comprend un tunnel (51) traversant adapté pour recevoir l'extrémité proximale du guide de lumière (6) et supporter ledit guide de lumière (6).

2. Dispositif d'éclairage selon la revendication 1, **caractérisé en ce que** à l'intérieur du boîtier (1) des masques (8, 9) réalisés en matériau opaque entourent au moins partiellement le guide de lumière (6).

3. Dispositif d'éclairage selon la revendication 2, **caractérisé en ce qu'**un masque (8) s'étend de façon sensiblement radiale de la partie rectiligne (61) du guide de lumière (6), entre la portion de diffusion (64) et le support de masque (5).

4. Dispositif d'éclairage selon la revendication 3, **caractérisé en ce que** le masque (8) est fixé au boîtier (1).

5. Dispositif d'éclairage selon l'une des revendications 2 à 4, **caractérisé en ce qu'**un masque (9) est fixé sur le support de masque (5) et possède une forme incurvée qui suit en partie la forme incurvée du guide de lumière (6), en étant placé à distance de ce dernier, du côté de sa concavité.

6. Dispositif d'éclairage selon la revendication 5, **caractérisé en ce que** la face du masque (9) orientée vers le guide de lumière (6) est recouverte d'un revêtement réfléchissant.

7. Dispositif d'éclairage selon l'une des revendications 1 à 6, **caractérisé en ce que** la convexité de la région incurvée (62) est orientée vers la face latérale de sortie de la lumière (F).

8. Dispositif d'éclairage selon l'une des revendications 1 à 7, **caractérisé en ce que** la portion diffusante comprend, d'une part, une partie diffusante (71) formant la face latérale de sortie de la lumière au niveau de la portion diffusante (64) et réalisée dans un matériau translucide ou transparent chargé de nanoparticules et, d'autre part, la partie de transmission de la lumière (70) de forme complémentaire de la partie diffusante (70) et réalisée dans le matériau transparent non chargé, la partie diffusante (71) présentant, en section droite transversale, une épaisseur variable qui augmente en direction de l'extrémité distale du guide de lumière (6).

9. Dispositif d'éclairage selon l'une des revendications 1 à 8, **caractérisé en ce que** la portion diffusante (64) comprend sur une face (F') opposée à la face latérale de sortie de la lumière (F) des motifs en creux (75) qui définissent dans la partie de transmission de la lumière (70) des surfaces de réflexion de la lumière.

10. Dispositif d'éclairage selon la revendication 9, **caractérisé en ce que** les motifs en creux (75) sont formés par des stries en V dont la pointe du V est orientée vers l'intérieur du guide de lumière.

11. Dispositif d'éclairage selon la revendication 9 ou 10, **caractérisé en ce que** la densité ou le pas des motifs en creux (75) est variable.

12. Dispositif d'éclairage selon la revendication 11, **caractérisé en ce que** le pas des motifs en creux (75) diminue en direction de l'extrémité distale de du guide de lumière (6) ou la densité des motifs augmente en direction de l'extrémité distale du guide de lumière (6).

13. Dispositif d'éclairage selon l'une des revendications précédentes, **caractérisé en ce qu'**il comprend, entre la source de lumière et le guide de lumière, un collimateur (4) dont l'extrémité proximale est située à proximité immédiate ou au contact de la source de lumière (3) et dont l'extrémité distale est située à proximité immédiate ou au contact de l'extrémité proximale du guide de lumière (6).

14. Dispositif d'éclairage selon la revendication 8, **caractérisé en ce qu'**il comprend, à la jonction du collimateur et du guide de lumière, un élément diffusant (7) en contact avec le collimateur (4) et le guide de lumière (6).

15. Dispositif d'éclairage selon la revendication 13, **caractérisé en ce que** le tunnel du support de masque est adapté pour recevoir l'extrémité distale du collimateur (4).

## Patentansprüche

1. Beleuchtungsmodul eines Kraftfahrzeugs mit wenigstens einer Lichtquelle (3) mit Leuchtdioden oder LED und einem langgestreckten Lichtleiter (6), von dem ein proximales Ende auf einer Ausbreitungslinie des von der Lichtquelle (3) ausgehenden Lichts gelegen ist, wobei der Lichtleiter (6)
- einen Lichtübertragungsteil (70) aus einem durchsichtigen Material, der sich über die gesamte Länge des Lichtleiters erstreckt,
- einen langgestreckten ausstrahlenden Teil (64), der sich in der Erstreckungsrichtung des Lichtleiters nur über einen Teil des Lichtleiters (6) erstreckt und dazu ausgelegt ist, wenigstens 10 % des gesamten, vom Lichtleiter (6) ausgehenden Lichts über eine seitliche Lichtausgangsfläche (F) auszustrahlen,
- von seinem proximalen Ende ausgehend, einen nur aus dem Lichtübertragungsteil (70) bestehenden geradlinigen Bereich (61) und, jenseits des geradlinigen Bereichs (61) und in Richtung seines distalen Endes, einen gekrümmten Bereich (62), wobei der ausstrahlende Teil (64) zwischen dem geradlinigen Bereich (61) und dem distalen Ende gelegen ist und sich wenigstens teilweise im gekrümmten Bereich (62) erstreckt,
- ein distales Ende, das durch den Lichtübertragungsteil gebildet ist und das eine ebene Endseite (72) aufweist, die mit der Mittelfaser (Fi) des Lichtleiters (6) einen nicht flachen, stumpfen und vom rechten Winkel verschiedenen Winkel (a) einschließt,
aufweist,
**dadurch gekennzeichnet, daß** das Beleuchtungsmodul ein Gehäuse (1) aufweist, in dessen Inneren die Lichtquelle (3) und der Lichtleiter (6) angeordnet sind und das durch eine wenigstens teilweise durchsichtige und/oder durchscheinende Vorderseite (10) abgeschlossen ist, um die Ausstrahlung des vom Lichtleiter (6) ausgehenden Lichtstrahls nach außen zu ermöglichen, und daß es im Inneren des Gehäuses einen Maskenträger (5) aufweist, der im Gehäuse (1) eine im Wesentlichen lichtdichte Aufnahmekammer (20) für die Lichtquelle begrenzt und der einen durchgehenden Tunnel (51) aufweist, der dazu ausgelegt ist, das proximale Ende des Lichtleiters (6) aufzunehmen und den Lichtleiter (6) zu tragen.

2. Beleuchtungsmodul gemäß Anspruch 1, **dadurch gekennzeichnet, daß** Masken (8, 9) aus undurchsichtigem Material im Inneren des Gehäuses (1) den Lichtleiter (6) wenigstens teilweise umhüllen.

3. Beleuchtungsmodul gemäß Anspruch 2, **dadurch gekennzeichnet, daß** sich eine Maske (8) im Wesentlichen radial vom geradlinigen Teil (61) des Lichtleiters (6) aus zwischen dem ausstrahlenden Teil (64) und dem Maskenträger (5) erstreckt.

4. Beleuchtungsmodul gemäß Anspruch 3, **dadurch gekennzeichnet, daß** die Maske (8) am Gehäuse (1) befestigt ist.

5. Beleuchtungsmodul gemäß einem der Ansprüche 2 bis 4, **dadurch gekennzeichnet, daß** eine Maske (9) am Maskenträger (5) befestigt ist und eine gekrümmte Form aufweist, die teilweise der gekrümmten Form des Lichtleiters (6) folgt, und dabei in einem Abstand von letzterem auf dessen hohler Seite angeordnet ist.

6. Beleuchtungsmodul gemäß Anspruch 5, **dadurch gekennzeichnet, daß** die zum Lichtleiter (6) hin gerichtete Seite der Maske (9) mit einer reflektierenden Beschichtung versehen ist.

7. Beleuchtungsmodul gemäß einem der Ansprüche 1 bis 6, **dadurch gekennzeichnet, daß** die konvexe Seite des gekrümmten Bereichs (62) zur seitlichen Lichtaustrittsseite (F) hin gerichtet ist.

8. Beleuchtungsmodul gemäß einem der Ansprüche 1 bis 7, **dadurch gekennzeichnet, daß** der ausstrahlende Bereich einerseits einen ausstrahlenden Teil (71), der die seitliche Lichtaustrittsseite im Bereich des ausstrahlenden Teils (64) bildet und aus einem durchscheinenden oder durchsichtigen mit Nanopartikeln versehenen Material gefertigt ist, und andererseits den in zum ausstrahlenden Teil (70) komplementären und aus einem durchsichtigen, nicht dotierten Material gefertigten Lichtübertragungsteil (70) aufweist, wobei der ausstrahlende Teil (71) im geraden Querschnitt gesehen eine veränderliche Dicke aufweist, die zum distalen Ende des Lichtleiters (6) hin zunimmt.

9. Beleuchtungsmodul gemäß einem der Ansprüche 1 bis 8, **dadurch gekennzeichnet, daß** der ausstrahlende Teil (64) auf einer der seitlichen Lichtaustrittsseite (F) gegenüberliegenden Seite (F') hohle Motive (75) aufweist, die im Lichtübertragungsbereich (70) Lichtreflexionsflächen definieren.

10. Beleuchtungsmodul gemäß Anspruch 9, **dadurch gekennzeichnet, daß** die hohlen Motive (75) durch V-förmige Striemen gebildet sind, deren V-Spitze zum Inneren des Lichtleiters gerichtet ist.

11. Beleuchtungsmodul gemäß Anspruch 9 oder 10, **dadurch gekennzeichnet, daß** die Dichte oder der Schritt der hohlen Motive (75) variabel ist.

12. Beleuchtungsmodul gemäß Anspruch 11, **dadurch gekennzeichnet, daß** der Schritt der hohlen Motive (75) zum distalen Ende des Lichtleiters (6) hin abnimmt oder die Dichte der Motive zum distalen Ende des Lichtleiters (6) hin zunimmt.

13. Beleuchtungsmodul gemäß einem der vorangehenden Ansprüche, **dadurch gekennzeichnet, daß** es zwischen der Lichtquelle und dem Lichtleiter einen Kollimator (4) aufweist, dessen proximales Ende in unmittelbarer Nähe oder in Kontakt mit der Lichtquelle (3) angeordnet ist und dessen distales Ende in unmittelbarer Nähe oder in Kontakt mit dem proximalen Ende des Lichtleiters (6) angeordnet ist.

14. Beleuchtungsmodul gemäß Anspruch 8, **dadurch gekennzeichnet, daß** es am Übergang zwischen Kollimator und Lichtleiter ein ausstrahlendes, mit dem Kollimator (4) und dem Lichtleiter (6) in Kontakt befindliches Element (7) aufweist.

15. Beleuchtungsmodul gemäß Anspruch 13, **dadurch gekennzeichnet, daß** der Tunnel des Maskenhalters dazu ausgelegt ist, das distale Ende des Kollimators (4) aufzunehmen.

## Claims

1. Vehicle lighting device comprising at least one light emitting or LED light source (3) and an elongate light guide (6), a proximal end of which is situated on a line of propagation of the light issuing from the light source (3), the light guide (6) comprises:
- a part transmitting light (70), made from a transparent material that extends over the entire length of the light guide;
- an elongate diffusing portion (64) extending in the direction of extension of the light guide (6) over only part of the length of the light guide and suitable for diffusing, through a lateral light-exit face (F), at least 10% of the total light issuing from the light guide (6);
- from its proximal end, a rectilinear region (61) consisting solely of the light-transmission part (70) and, beyond the rectilinear part (61) and in the direction of its distal end, a curved region (62), the diffusing portion (64) being situated between the rectilinear part (61) and the distal end and extending at least partly in the curved region (62),
- a distal end formed by the light-transmission part and having a planar end face (72) forming a non-flat obtuse angle (α) different from a right angle with the mean fibre (Fi) of the light guide (6);**characterised in that** the lighting device comprises a housing (1) inside which the light source (3) and the light guide (6) are situated and which is closed by an at least partly transparent and/or translucent front face (10) to allow diffusion to the outside of the light beam issuing from the light guide (6), and inside the housing, a mask support (5) that delimits in the housing (1) a chamber (20) receiving the light source (3), which is substantially light-tight and comprises a through tunnel (51) suitable for receiving the proximal end of the light guide (6) and support said light guide (6).

2. Lighting device according to claim 1, **characterised in that** in the housing (1) masks (8, 9) produced from opaque material which at least partially surround the light guide (6)

3. Lighting device according to claim 2, **characterised in that** a mask (8) extends substantially radially from the rectilinear part (61) of the light guide (6), between the diffusion portion (64) and the mask support (5).

4. Lighting device according to claim 3, **characterised in that** mask(8) is attached to the housing (1).

5. Lighting device according to one of claims 2 to 4, **characterised in that** a mask (9) is fixed on the mask support (5) and has a curved shape which partly follows the curved shape of the light guide (6), being placed at a distance from the latter, on the side of its concavity.

6. Lighting device according to claim 5, **characterised in that** the face of the mask (9) facing the light guide (6) is covered with a reflective coating.

7. Lighting device according to one of claims 1 to 6 **characterised in that** the convexity of the curved region (62) is oriented towards the lateral light-exit face (F).

8. Lighting device according to one of claims 1 to 7, **characterised in that** the diffusing portion comprises firstly a diffusing part (71) forming the lateral light-exit face at the diffusing portion (64) and produced from a translucent or transparent material containing nanoparticles, and secondly the light-transmission part (70) with a shape complementary to the diffusing part (70) and produced from a transparent material without filler, the diffusing part (71) having, in cross section, a variable thickness that increases in the direction of the distal end of the light guide (6).

9. Lighting device according to one of claims 1 to 8, **characterised in that** the diffusing portion (64) comprises, on a face (F') opposite to the lateral light-exit face (F), hollow patterns (75) that define light-reflection surfaces in the light-transmission part (70).

10. Lighting device according to claim 9, **characterised in that** the hollow patterns (75) are formed by V-shaped serrations, where the apex of the V is oriented towards the inside of the light guide.

11. Lighting device according to claim 9 or 10, **characterised in that** the density or pitch of the hollow patterns (75) is variable.

12. Lighting device according to claim 11, **characterised in that** the density or pitch of the hollow patterns (75) decreases in the direction of the distal end of the light guide (6) or the density of the patterns increases in the direction of the distal end of the light guide (6).

13. Lighting device according to one of the preceding claims, **characterised in that** it comprises, between the light source and the light guide, a collimator (4), the proximal end of which is situated in the immediate vicinity of or in contact with the light source (3) and the distal end of which is situated in the immediate vicinity of or in contact with the proximal end of the light guide (6).

14. Lighting device according to claim 8, **characterised in that** it comprises, at the junction of the collimator and light guide, a diffusing element (7) in contact with the collimator (4) and light guide (6).

15. Lighting device according to claim 9**characterised in that** the tunnel supporting the mask is suitable for receiving the distal end of the collimator (4).
